# EUROPEAN PATENT APPLICATION

(11) **EP 3 540 724 A1**
(43) Date of publication of application: **18.09.2019**
(21) Application number: 19156578.7
(22) Date of filing: 12.02.2019
(51) Int. Cl.: G09G 5/12, G06F 3/14, G06F 9/445, H04L 12/18, H04L 12/24

(54) **INFORMATION SYNCHRONIZATION SYSTEM, METHOD OF SYNCHRONIZING SETTING INFORMATION AND INFORMATION PROCESSING APPARATUS**

(30) Priority: 16.03.2018 JP 2018049661
(71) Applicant: Ricoh Company, Ltd., Tokyo 143-8555 (JP)
(72) Inventor: KAKEI, Yuushin, Tokyo, 143-8555 (JP); KANDA, Tomoki, Tokyo, 143-8555 (JP); MITSUHASHI, Masahiro, Tokyo, 143-8555 (JP)
(74) Representative: SSM Sandmair

(57) **Abstract**

An information synchronization system includes a first information processing apparatus (2P) that is to synchronize setting information related to settings of the first information processing apparatus (2P), and a plurality of second information processing apparatuses (2a, 2b, 2c, 2d, 2n) that are to be synchronized with the setting information set to the first information processing apparatus (2P), the plurality of second information processing apparatuses (2a, 2b, 2c, 2d, 2n) being registered to registration information. The first information processing apparatus (2P) includes a first processor (201) configured to determine a delegation destination apparatus (2c) from the plurality of second information processing apparatuses (2a, 2b, 2c, 2d, 2n) registered to the registration information based on a preset condition, the delegation destination apparatus (2c) is delegated from the first information processing apparatus (2P) authority to perform a synchronization of the setting information to one or more other second information processing apparatuses of the plurality of second information processing apparatuses (2a, 2b, 2d, 2n), transmit the setting information, the registration information, and a request for processing related to synchronization of the setting information to the determined delegation destination apparatus (2c), and transmit the setting information to the one or more other second information processing apparatuses (2a, 2b, 2d, 2n) registered to the registration information to synchronize the setting information with the one or more other second information processing apparatuses (2a, 2b, 2d, 2n). The delegation destination apparatus (2c) includes a second processor (201) configured to receive the setting information, the registration information, and the request for processing related to the synchronization of the setting information from the first information processing apparatus (2P), in response to receiving the request for processing related to the synchronization of the setting information from the first information processing apparatus (2P), change a first flag indicating that the delegation destination apparatus (2c) does not perform the synchronization of the setting information to the one or more other second information processing apparatuses (2a, 2b, 2d, 2n) to a second flag indicating that the delegation destination apparatus (2c) performs the synchronization of the setting information to the one or more other second information processing apparatuses (2a, 2b, 2d, 2n), and transmit the setting information received from the first information processing apparatus (2P) to the one or more other second information processing apparatuses (2a, 2b, 2d, 2n) registered to the registration information to synchronize the setting information with the one or more other second information processing apparatuses (2a, 2b, 2d, 2n).

## Description

### BACKGROUND

### Technical Field

This disclosure relates to an information synchronization system, a method of synchronizing setting information, and an information processing apparatus.

### Background Art

Electronic information boards that can be shared by a plurality of users are installed in rooms, such as rooms in companies, classrooms in educational institutions or the like. The electronic information boards have a large touch panel display to display images drawn by an electronic pen or each user's finger that is operated on the touch panel display. Different from conventional whiteboards, the electronic information boards can store drawn images as electronic data and display images received from a personal computer (PC). The users can participate meetings and classes while viewing the same screen being displayed on the electronic information boards.

The electronic information boards are becoming more and more sophisticated such that the electronic information boards can be connected to printers and can communicate with electronic information boards at other sites, increasing the number of setting items to be set by administrators. Since a plurality of electronic information boards of the same type may be introduced to one organization, it has been cumbersome for administrators to set setting information for each of the electronic information boards of the same type one by one.

A technology is devised for this inconvenience, in which an administrator sets one electronic information board as a parent apparatus and other apparatuses as children apparatuses, in which the setting information set in the parent apparatus can be automatically set in the children apparatuses as disclosed in JP-2017-068684-A. In this system, the electronic information board used as the parent apparatus transmits the setting information of the electronic information board of the parent apparatus to each of the electronic information boards used as the children apparatus, and then each of the electronic information boards used as the children apparatus sets the setting information of the electronic information board of the parent apparatus, with which the electronic information board of the parent apparatus and each of the electronic information boards used as the children apparatus can synchronize the setting information.

However, if the number of children apparatuses to be synchronized is large, a longer time may be required until the synchronization of the setting information of all of the electronic information boards is completed. In other words, in conventional technology, since the setting information is transmitted from the parent apparatus to all of the children apparatuses sequentially and then synchronized, it takes a time that is increased according to the number of children apparatuses as a time is required until the synchronization of the last child apparatus is completed. Therefore, if the synchronization of setting information is not completed in one child apparatus that a user intends to use, the user cannot use the child apparatus with the latest setting information.

Further, since the parent apparatus continues to communicate with all of the children apparatuses to perform synchronization of the setting information until the synchronization of the setting information with all of the children apparatuses is completed, the processing load on the network connected to the parent apparatus increases. Further, the processing load on the parent apparatus becomes greater.

The issue of synchronization of the setting information may occur not only for the electronic information boards but also for any information processing apparatus that is operated using the setting information. In this disclosure, the electronic information board may operate as the information processing apparatus, and the electronic information board may be referred to as the information processing apparatus.

### SUMMARY

As one aspect of the information synchronization system, is devised. The information synchronization system includes a first information processing apparatus that is to synchronize setting information related to settings of the first information processing apparatus, and a plurality of second information processing apparatuses that are to be synchronized with the setting information set to the first information processing apparatus, the plurality of second information processing apparatuses being registered to registration information. The first information processing apparatus includes first circuitry configured to determine a delegation destination apparatus from the plurality of second information processing apparatuses registered to the registration information based on a preset condition, the delegation destination apparatus is delegated from the first information processing apparatus authority to perform a synchronization of the setting information to one or more other second information processing apparatuses of the plurality of second information processing apparatuses, transmit the setting information, the registration information, and a request for processing related to synchronization of the setting information to the determined delegation destination apparatus, and transmit the setting information to the one or more other second information processing apparatuses registered to the registration information to synchronize the setting information with the one or more other second information processing apparatuses. The delegation destination apparatus includes second circuitry configured to receive the setting information, the registration information, and the request for processing related to the synchronization of the setting information from the first information processing apparatus, in response to receiving the request for processing related to the synchronization of the setting information from the first information processing apparatus, change a first flag indicating that the delegation destination apparatus does not perform the synchronization of the setting information to the one or more other second information processing apparatuses to a second flag indicating that the delegation destination apparatus performs the synchronization of the setting information to the one or more other second information processing apparatuses, and transmit the setting information received from the first information processing apparatus to the one or more other second information processing apparatuses registered to the registration information to synchronize the setting information with the one or more other second information processing apparatuses.

As another aspect of the present invention, a method of synchronizing setting information in an information synchronization system including a first information processing apparatus that is to synchronize the setting information related to settings of the first information processing apparatus, and a plurality of second information processing apparatuses that are to be synchronized with the setting information of the first information processing apparatus, the plurality of second information processing apparatuses being registered to registration information is devised. The method includes determining a delegation destination apparatus from the plurality of second information processing apparatuses registered to the registration information based on a preset condition, the delegation destination apparatus is delegated from the first information processing apparatus authority to perform a synchronization of the setting information to one or more other second information processing apparatuses of the plurality of second information processing apparatuses, transmitting the setting information, the registration information, and a request for processing related to synchronization of the setting information to the determined delegation destination apparatus from the first information processing apparatus, transmitting, from the first information processing apparatus, the setting information to the one or more other second information processing apparatuses registered to the registration information to synchronize the setting information with the one or more other second information processing apparatuses, receiving, in the delegation destination apparatus, the setting information, the registration information, and the request for processing related to the synchronization of the setting information from the first information processing apparatus, in response to receiving the request for processing related to the synchronization of the setting information from the first information processing apparatus, changing a first flag of the delegation destination apparatus indicating that the delegation destination apparatus does not perform the synchronization of the setting information to the one or more other second information processing apparatuses to a second flag of the delegation destination apparatus indicating that the delegation destination apparatus performs the synchronization of the setting information to the one or more other second information processing apparatuses, and transmitting, from the delegation destination apparatus, the setting information received from the first information processing apparatus to the one or more other second information processing apparatuses registered to the registration information to synchronize the setting information with the one or more other second information processing apparatuses.

As another aspect of the present invention, an information processing apparatus to synchronize setting information related to settings of the information processing apparatus with a plurality of another information processing apparatuses being registered to registration information is devised. The information processing apparatus includes circuitry configured to determine a delegation destination apparatus from the plurality of another information processing apparatuses registered to the registration information based on a preset condition, the delegation destination apparatus is delegated from the information processing apparatus authority to perform a synchronization of the setting information to one or more other another information processing apparatuses of the plurality of another information processing apparatuses, transmit the setting information to the one or more other another information processing apparatuses registered to the registration information to synchronize the setting information with the one or more other another information processing apparatuses, and transmit the setting information, the registration information, and a request for processing related to synchronization of the setting information to the determined delegation destination apparatus. The request for processing related to the synchronization of the setting information transmitted to the delegation destination apparatus causes the delegation destination apparatus to change a first flag of the delegation destination apparatus indicating that the delegation destination apparatus does not perform the synchronization of the setting information to the one or more other another information processing apparatuses to a second flag of the delegation destination apparatus indicating that the delegation destination apparatus performs the synchronization of the setting information to the one or more other another information processing apparatuses, and causes the delegation destination apparatus to transmit the setting information received from the information processing apparatus to the one or more other another information processing apparatuses registered to the registration information to synchronize the setting information with the one or more other another information processing apparatuses.

As to the above described aspects of the present invention, the information synchronization system, the method of synchronizing setting information, and the information processing apparatus that can shorten the time required to synchronize the setting information for a plurality of information processing apparatuses can be provided.

### BRIEF DESCRIPTION OF THE DRAWINGS

A more complete appreciation of the description and many of the attendant advantages and features thereof can be readily obtained and understood from the following detailed description with reference to the accompanying drawings, wherein:
FIG. 1 illustrates a scheme of an operation of an electronic information board used as a parent apparatus when the electronic information board used as the parent apparatus synchronizes setting information with a plurality of electronic information boards used as children apparatuses according to an embodiment;
FIGs. 2A and 2B (FIG. 2) illustrate examples of a schematic configuration of an information synchronization system;
FIG. 3 illustrates an example of a hardware block diagram of an electronic information board;
FIGs. 4A and 4B (FIG. 4) are an example of a functional block diagram of an electronic information board;
FIG. 5 is an example of a sequence diagram illustrating a procedure when one parent apparatus transmits setting information to all of children apparatuses;
FIG. 6 is an example of a scheme of conventional synchronization method of the setting information;
FIG. 7 is an example of a scheme of synchronization of setting information using an information synchronization system according to the embodiment;
FIGs. 8A and 8B (FIG. 8) are an example of a sequence diagram illustrating a synchronization procedure of setting information using an information synchronization system according to the embodiment;
FIG. 9 is an example of a flowchart illustrating a process when the parent apparatus synchronizes setting information;
FIG. 10 is an example of a flowchart illustrating a process when a delegation destination apparatus synchronizes setting information;
FIG. 11 (FIGs.11(a), 11(b) and 11(c)) illustrates an example of child apparatus information transmitted to a delegation destination apparatus from a parent apparatus; and
FIG. 12 illustrates another example of a configuration of an electronic information board.

The accompanying drawings are intended to depict embodiments of the present invention and should not be interpreted to limit the scope thereof. The accompanying drawings are not to be considered as drawn to scale unless explicitly noted.

### DETAILED DESCRIPTION

A description is now given of exemplary embodiments of the present invention. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Hereinafter, a description is given of a configuration of an embodiment of the present invention with reference to the drawings.

### Operation of System:

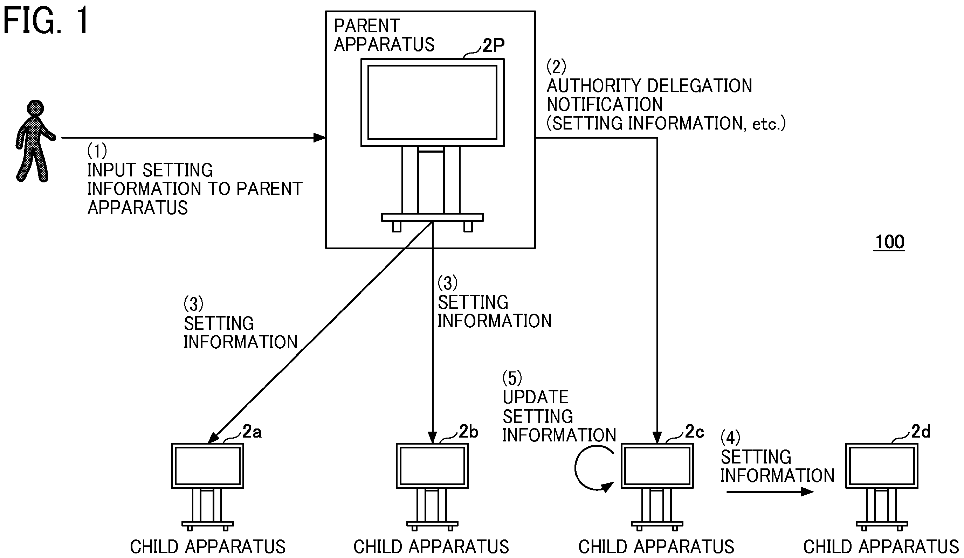

Hereinafter, a description is given of an operation of an information synchronization system 100 schematically with reference to FIG. 1. FIG. 1 illustrates a scheme of an operation of an electronic information board 2 used as a parent apparatus (first, primary or master apparatus) when the electronic information board 2, used as the parent apparatus, synchronizes setting information (configuration information) of the electronic information board 2 of the parent apparatus with a plurality of the electronic information boards 2, each used as a child apparatus (second, secondary or slave apparatus). In this description, the electronic information board 2 used as the parent apparatus is represented by an electronic information board 2P while the electronic information board 2 used as the child apparatus is represented by the electronic information boards 2a, 2b, 2c, 2 d, and 2n. Further, any one or more of the plurality of electronic information boards 2 may be simply referred to as the electronic information board 2. Further, the electronic information board 2 used as the parent apparatus may be simply referred to as "parent apparatus" while the electronic information board 2 used as the child apparatus may be simply referred to as "child apparatus."

Further, there is no difference in hardware and software between the parent apparatus and the child apparatus, and thereby the electronic information board 2 set as the parent apparatus by an administrator becomes the parent apparatus. Each of other electronic information boards 2 not set as the parent apparatus is used as the child apparatus. That is, when the electronic information boards 2 are shipped from factories, all of the electronic information boards 2 are set as the children apparatus and only the electronic information board 2, which is set as the parent apparatus, is used as the parent apparatus. The function of the parent apparatus includes at least a function of synchronizing the setting information, set in the parent apparatus, with one or more of the children apparatuses.

Hereinafter, a description is given of an operation procedure of the information synchronization system 100 with reference to FIG. 1.
(1) An administrator inputs and sets setting information to the electronic information board 2P used as the parent apparatus.
(2) When the electronic information board 2P detects that the administrator sets the setting information to the electronic information board 2P, the electronic information board 2P starts synchronization processing of the setting information. At first, the electronic information board 2P (parent apparatus) transmits an authority delegation notification for delegating authority of the parent apparatus to one or more electronic information boards 2. The authority delegation notification includes, for example, the setting information. In an example case of FIG. 1, it is assumed that the authority of the parent apparatus is delegated to the electronic information board 2c. The child apparatus to which the parent apparatus authority is delegated is referred to as a "delegation destination apparatus" in this description.
(3) The electronic information board 2P transmits the setting information to the electronic information boards 2a and 2b. Then, each of the electronic information board 2a and 2b updates the setting information of the electronic information board 2a and 2b.
(4) The electronic information board 2c transmits the setting information to the electronic information board 2d. Then, the electronic information board 2d updates the setting information the electronic information board 2d.
(5) At last, the electronic information board 2c updates the setting information in the electronic information board 2cmurata.

Therefore, the administrator can synchronize the setting information of the electronic information board 2P with all of the electronic information boards 2a to 2d by setting the setting information to the electronic information board 2P alone. Since the electronic information board 2P delegates the authority of the parent apparatus to the electronic information board 2c, the electronic information board 2P and the electronic information board 2c can transmit the setting information to the electronic information boards 2a, 2b, and 2d in parallel or concurrently, with which the time required for synchronizing the setting information with all of the electronic information boards 2a to 2d can be shortened. Further, in an example case of FIG. 1, since the number of children apparatuses to which the parent apparatus transmits the setting information can be reduced, such as about a half of four electronic information boards 2, the processing load on the electronic information board 2P used as the parent apparatus and the processing load on the network connected to the electronic information board 2P can be reduced.

The delegation of the authority of the parent apparatus differs from a configuration having two parent apparatuses from the beginning in the information synchronization system 100. If the information synchronization system 100 includes two parent apparatuses from the beginning, the administrator needs to set the setting information to each one of the two parent apparatuses, in which the workload of the administrator increases. In the embodiment, the administrator sets the setting information to one parent apparatus.

In this description, the synchronization of the setting information of the electronic information board 2P (parent apparatus) and the setting information of the electronic information boards 2a to 2d (child apparatus) performed by the electronic information board 2P may be simply referred to that the electronic information board 2P synchronizes with the electronic information boards 2a to 2d.

### Terms:

The synchronization of setting information means a process of matching information among a plurality of apparatuses within a given time range or period, such as acceptable time duration. In the embodiment, the setting information set in the parent apparatus can be set to the child apparatus within the given time range even if the administrator does not set the setting information to each one of the children apparatuses. By performing the synchronization, a plurality of the electronic information boards 2 can be set with the same setting information. During a time period of updating the setting information of the electronic information board 2P (parent apparatus) and then updating the setting information of the electronic information board (child apparatus), the setting information may not be the same in the parent apparatus and child apparatus, and it is preferable that the time period is set shorter.

The processing required for synchronization includes, for example, transmission of the setting information and updating of the setting information, and the transmission of the setting information and updating of the setting information mean the synchronization of the setting information.

In the embodiment, a first information processing apparatus, set as an apparatus that performs the synchronization of the setting information, is an information processing apparatus having an authority or a function of setting the setting information to another information processing apparatus. In the embodiment, the first information processing apparatus corresponds to the term of "parent apparatus," such as one of the electronic information boards.

In the embodiment, a second information processing apparatus, set as an apparatus to be synchronized with the setting information, is an information processing apparatus to which the setting information is set from the first information processing apparatus. In the embodiment, the second information processing apparatus corresponds to the term of "child apparatus," such as one or more of the electronic information boards. Further, in the embodiment, one or more of the second information processing apparatuses can be designated as the delegation destination apparatus, to be described later in this description. The second information processing apparatus may be also referred to as another information processing apparatus.

In the embodiment, registration information indicates information registering the second information processing apparatus, which is a target of registering the setting information. In the embodiment, the registration information corresponds to the term of "child apparatus information."

In the embodiment, the parent apparatus determines the delegation destination apparatus based on a preset condition using any rule or criteria. In the embodiment, the parent apparatus determines the delegation destination apparatus, for example, using usage frequency of the electronic information boards 2 as a preset condition, which will be described later.

In the embodiment, the delegation of authority means that the first information processing apparatus assigns the authority set to the first information processing apparatus to the second information processing apparatus. This authority can be also expressed as a function. In the embodiment, the authority to synchronize the setting information of the parent apparatus and the setting information of the child apparatus can be delegated to the second information processing apparatus used as the delegation destination apparatus.

In the embodiment, a request for performing the synchronization of the setting information indicates a request for delegating the authority of synchronizing the setting information. In the embodiment, the request for performing the synchronization of the setting information corresponds to the term of "authority delegation notification."

### System Configuration:

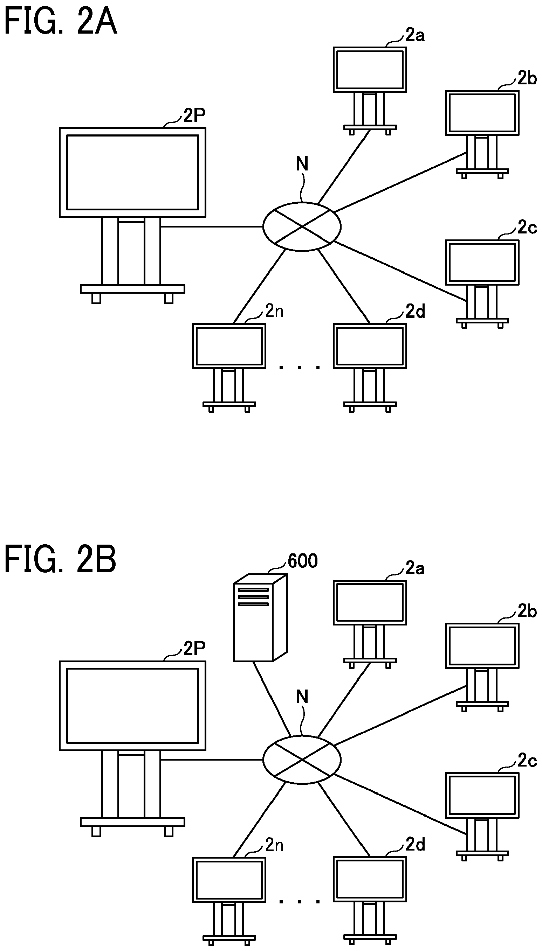

FIGs. 2A and 2B (FIG. 2) illustrate examples of a schematic configuration of the information synchronization system 100 of the embodiment. As illustrated in FIG. 2A, the information synchronization system 100 includes, for example, a plurality of electronic information boards 2 (2P, 2a, 2b, 2c, 2d, ..., 2n) that communicate with each other via a network N. In FIG. 2, the number of the electronic information boards 2 connected to the network N is six, but the number of electronic information boards 2 can be any numbers, such as seven or more. In large organizations, several tens of the electronic information boards 2 may be connected to the network N.

The network N is constructed by the Internet, a mobile communication network, a local area network (LAN), and the like. The network N may include not only a wired communication but also a wireless communication network such as 3G (3rd Generation), WiMAX (Worldwide Interoperability for Microwave Access), and LTE (Long term evolution).

The electronic information board 2 is an electronic apparatus including a touch panel, in which coordinates (positions) of an electronic pen or fingertip on a screen, input by contacting and moving the electronic pen or fingertip on the screen, are acquired from the touch panel, and one or more strokes connecting the coordinates is displayed on a display integrated with the touch panel. Any type of touch panel can be used. The electronic information board 2 may be referred using different names, such as an electronic whiteboard, an electronic blackboard, or the like depending on sales goods. Further, since the electronic information board 2 has a function of a computer, the electronic information board 2 can be referred to as an information processing apparatus. Further, a tablet terminal equipped with a touch panel can be also used as the electronic information board 2.

The electronic information board 2 can communicate with another electronic information board 2 to transmit and receive data of images drawn by a user (hereinafter, referred to as "drawn image data"). Therefore, the content drawn on one electronic information board 2 can be displayed on another electronic information board 2, and the content drawn on another electronic information board 2 can be also displayed on one electronic information board 2.

Further, the electronic information board 2 can include a video conference function (teleconference function), with which the electronic information board 2 can perform a video/voice conference with a video conference terminal via the network N.

Further, as illustrated in FIG. 2B, the information synchronization system 100 includes a server 600. The server 600 is an information processing apparatus that relays transmission of the setting information. The electronic information board 2 in one firewall and another electronic information board 2 in another firewall can communicate with each other via the server 600, with which the synchronization of setting information can be facilitated. Further, the server 600 can be installed within the firewall.

For example, the electronic information board 2P transmits the setting information and the identification information of the delegation destination apparatus to the server 600. The electronic information boards 2a to 2d sequentially communicate with the server 600, and the electronic information board 2c, which has been delegated with the authority of the parent apparatus, synchronizes the setting information with the electronic information board 2a, 2b, and 2d.

### Hardware Configuration

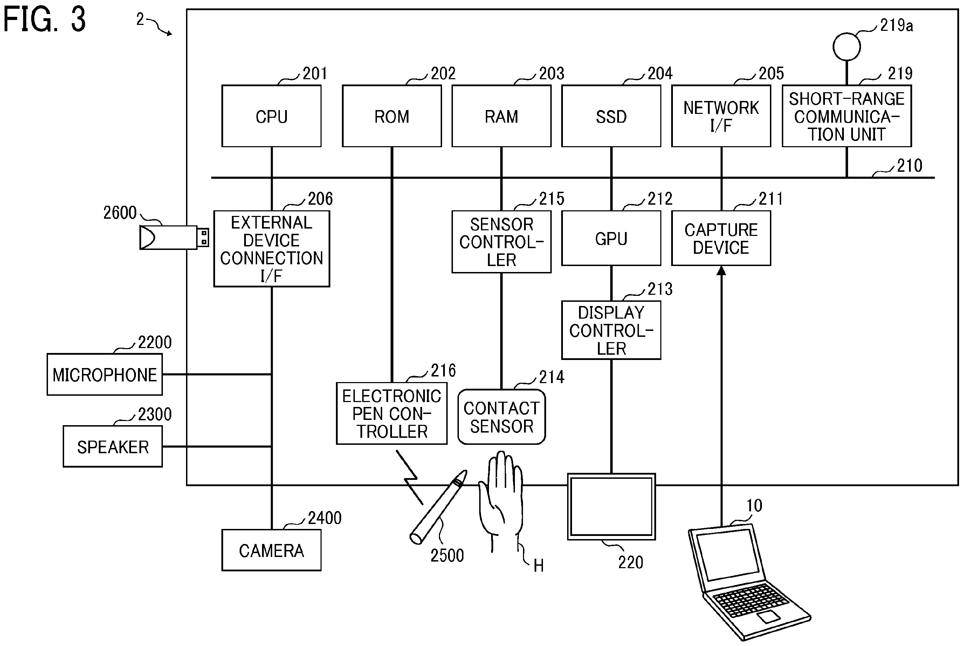

Hereinafter, a description is given of a hardware configuration of the electronic information board 2 with reference to FIG. 3.

### Hardware Configuration of Electronic Information Board:

FIG. 3 illustrates an example of a hardware block diagram of the electronic information board 2. As illustrated in FIG. 3, the electronic information board 2 includes, for example, a central processing unit (CPU) 201, a read only memory (ROM) 202, a random access memory (RAM) 203, a solid state drive (SSD) 204, a network interface (I/F) 205, and an external device connection interface (I/F) 206.

The CPU 201 controls the operation of the electronic information board 2 entirely. The ROM 202 stores programs used for driving the CPU 201, such as an initial program loader (IPL). The RAM 203 is used as a work area of the CPU 201. The SSD 204 stores various data, such as programs used for the electronic information board 2. The network I/F 205 controls communication with the network N. The external device connection I/F 206 controls communication with a universal serial bus (USB) memory 2600 and external devices, such as a camera 2400, a speaker 2300, and a microphone 2200.

The electronic information board 2 further includes, for example, a capture device 211, a graphics processing unit (GPU) 212, a display controller 213, a contact sensor 214, a sensor controller 215, an electronic pen controller 216, a short-range communication unit 219, and an antenna 219a of the short-range communication unit 219.

The capture device 211 acquires image information to be displayed on a display, to be described later, by the PC 10 as a still image or a movie image. The GPU 212 is a semiconductor chip that processes graphics data. The display controller 213 controls and manages a screen display to output an image, output from the GPU 212, to a display 220 or the like. The contact sensor 214 detects a contact of the electronic pen 2500, a user's hand H or the like on the display 220.

The sensor controller 215 controls the processing of the contact sensor 214. The contact sensor 214 performs an input of coordinates and a detection of coordinates using an infrared blocking system.

The method of inputting coordinates and detecting the coordinates can be performed using two light emitting-receiving devices, each installed at each upper end of the display 220. When the two light emitting-receiving devices emit a plurality of infrared rays in parallel on the display 220, the plurality of infrared rays reflects from a reflecting member provided at periphery of the display 220, and then a light receiving element in each of the two light emitting-receiving receives the plurality of infrared rays that is reflected along the light path of the plurality of infrared rays emitted by the light emitting-receiving devices. The contact sensor 214 outputs an identification (ID) of the infrared ray emitted by the two light emitting-receiving devices and blocked by an object to the sensor controller 215, and then the sensor controller 215 identifies or specifies a coordinate position of the object, which is a contact position of the object.

The electronic pen controller 216 communicates with the electronic pen 2500 to determine whether a front end or a rear end of the electronic pen 2500 touches the display 220. The short-range communication unit 219 is a wireless communication circuit, such as near-field communication (NFC), Bluetooth (registered trademark), or the like.

The electronic information board 2 further includes, for example, a bus line 210. The bus line 210 is an address bus and data bus for electrically connecting each component such as the CPU 201 illustrated in FIG. 3.

Further, the contact sensor 214 is not limited to an infrared blocking system but can employ various detection systems. For example, a touch panel of an electrostatic capacity system in which a contact position is identified by detecting a change in capacitance, a touch panel of a resistance film type in which a voltage change of two opposing resistance films is detected to identify a contact position, and a touch panel of an electromagnetic induction system in which a contact position is identified by detecting an electromagnetic induction induced by contacting a contact object with a display can be used as the detection systems.

Further, the electronic pen controller 216 can be configured to determine not only touching of the front end and rear end of the electronic pen 2500 but also touching of a portion of the electronic pen 2500 held by the user and another portion of the electronic pen 2500.

### Functional Configuration:

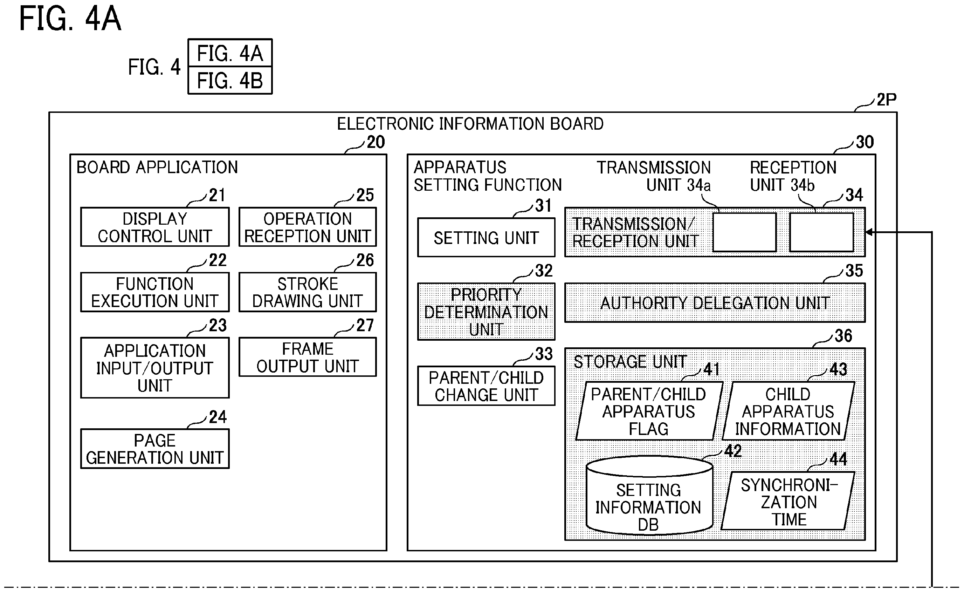

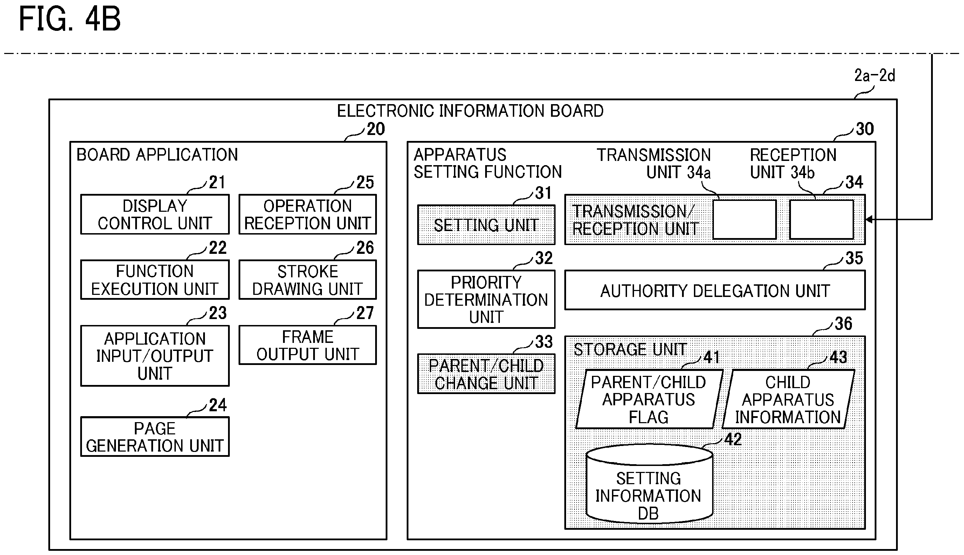

Hereinafter, a description is given of a functional configuration of the electronic information board 2 with reference to FIG. 4. FIGs. 4A and 4B (FIG. 4) are an example of a functional block diagram of the electronic information board 2. In FIG. 4, the functional configuration of the electronic information board 2P used as the parent apparatus and the functional configuration of the electronic information boards 2a to 2d used as the children apparatuses are illustrated.

### Functional Configuration of Electronic Information Board:

As illustrated in FIG. 4, the electronic information board 2 includes, for example, a board application 20 and an apparatus setting function 30. The board application 20 is an application that provides one or more functions of the electronic information board 2. The apparatus setting function 30 has one or more functions related to synchronization of the setting information. Each of the electronic information boards 2 includes the board application 20 and the apparatus setting function 30 regardless of the difference between the parent apparatus and child apparatus. However, the parent apparatus enables the functions necessary for the parent apparatus while the child apparatus enables the functions necessary for the child apparatus. In FIG. 4, the functions indicated by shading corresponds to the functions that are enabled or valid in the apparatus setting function 30. As to the electronic information board 2c, to be used as the delegation destination apparatus, a state before the authority of the parent apparatus is delegated to the electronic information board 2c is illustrated.

As illustrated in FIG. 4, the board application 20 includes, for example, a display control unit 21, a function execution unit 22, an application input/output unit 23, a page generation unit 24, an operation reception unit 25, a stroke drawing unit 26, and a frame output unit 27. Each of these functional units can be implemented by operating any of the components illustrated in FIG. 3 under the control of the CPU 201 in accordance with one or more programs installed on the electronic information board 2 and loaded on the RAM 203 from the SSD 204.

### Function of Board Application:

Hereinafter, a description is given of each of the functional units of the board application 20. The display control unit 21, implemented by an instruction from the CPU 201 and the display controller 213 illustrated in FIG. 3, controls the display 220 to display a rendered or drawn image.

The function execution unit 22, implemented by an instruction from the CPU 201 illustrated in FIG. 3, executes various functions necessary for the electronic information board 2. The application input/output unit 23, implemented by an instruction from the CPU 201 illustrated in FIG. 3, performs an input/output of information with various applications, such as a teleconference application, a mail application, and the like that are used with the board application 20.

The page generation unit 24, implemented by an instruction from the CPU 201 illustrated in FIG. 3, acquires or captures a drawn image displayed on the display 220 in accordance with an operation of a user to generate a drawn image data of one page.

The operation reception unit 25, mainly implemented by the CPU 201 and the contact sensor 214 and the electronic pen controller 216 illustrated in FIG. 3, receives various inputs from a user.

The stroke drawing unit 26, implemented by an instruction from the CPU 201 illustrated in FIG. 3, converts coordinate data, input by the user using the electronic pen 2500 or the hand H, into the drawn image data.

The frame output unit 27, implemented by an instruction from the CPU 201 illustrated in FIG. 3, transmits images captured by the camera used for one electronic information board 2 disposed at one location during a video conference to another electronic information board 2 disposed at another location. Similarly, images captured by a camera used for another electronic information board 2 disposed at another location are transmitted to one electronic information board 2 disposed at one location.

### Function of Apparatus Setting Function:

Hereinafter, a description is given of each of the functional units of the apparatus setting function 30. As illustrated in FIG. 4, the apparatus setting function 30 includes, for example, a setting unit 31, a priority determination unit 32, a parent/child change unit 33, a transmission/reception unit 34, and an authority delegation unit 35. Each of these functional units can be implemented by operating any of the components illustrated in FIG. 3 under the control of the CPU 201 in accordance with one or more programs installed on the electronic information board 2 and loaded on the RAM 203 from the SSD 204. The electronic information board 2 further includes, for example, a storage unit 36 implemented by the RAM 203 and the SSD 204 illustrated in FIG. 3.

### Function Valid in Parent Apparatus:

Hereinafter, the functions that become valid in the parent apparatus is described. The functions that become valid in the parent apparatus include the priority determination unit 32, the transmission/reception unit 34, the authority delegation unit 35, and the storage unit 36.

The transmission/reception unit 34, implemented by an instruction from the CPU 201 and the network I/F205 and the external device connection I/F 206 illustrated in FIG. 3, transmits and receives various information with another electronic information board 2 via the network N to synchronize the setting information. The transmission/reception unit 34 includes, for example, a transmission unit 34a and a reception unit 34b.

If a plurality of the electronic information boards 2a to 2d used as the children apparatus exists, based on a priority level of the electronic information boards 2a to 2d determined in accordance with the usage frequency of the electronic information boards 2a to 2d, the priority determination unit 32 determines which electronic information board among the electronic information boards 2a to 2d is to be updated with the setting information at first, and which electronic information board among the electronic information boards 2a to 2d is to be delegated with the authority of the parent apparatus. In the embodiment, the priority determination unit 32 of the parent apparatus determines the electronic information board 2 having a higher usage frequency as the synchronization destination with a higher priority level and the electronic information board 2 having a lower usage frequency as the delegation destination of the authority (hereinafter, delegation destination apparatus), in which the electronic information board 2 having the lowest usage frequency can be determined as the delegation destination apparatus at first based on the ascending order of the usage frequency determined for the electronic information boards 2a to 2d.

The authority delegation unit 35 delegates the authority of the parent apparatus to the child apparatus determined by the priority determination unit 32. Specifically, the authority delegation unit 35 transmits an authority delegation notification for delegating the authority of the parent apparatus to the child apparatus. The authority delegation notification includes, for example, the setting information, child apparatus information 43, priority level information, and synchronization time 44. The child apparatus information 43 includes, for example, an internet protocol (IP) address of the child apparatus necessary for transmitting the setting information to the child apparatus from the delegation destination apparatus.

Hereinafter, a description is given of a parent/child apparatus flag 41, child apparatus information 43, a setting information database (DB) 42, and synchronization time 44 stored in the storage unit 36 of the parent apparatus.

**[Table 1a]**

| | |
|---|---|
| parent/child apparatus flag | child apparatus |

Table 1a schematically illustrates the parent/child apparatus flag 41. The parent/child apparatus flag 41 is a flag indicating whether the electronic information board 2 is set as the parent apparatus or the child apparatus. The electronic information board 2 is set with "child apparatus" as an initial value when the electronic information board 2 is shipped from the factory. When an administrator sets the electronic information board 2 as the parent apparatus, the "parent apparatus" is set in the parent/child apparatus flag 41.

**[Table 1b]**

| | |
|---|---|
| parent/child apparatus flag of delegation destination apparatus | child apparatus → parent apparatus → child apparatus |

Table 1b illustrates a transition of flag information of the parent/child apparatus flag 41 of the delegation destination apparatus, which is delegated with the authority of the parent apparatus. When the authority of the parent apparatus is delegated to the delegation destination apparatus, the delegation destination apparatus changes the parent/child apparatus flag 41 from "child apparatus (first flag)" to "parent apparatus (second flag)" and returns the parent/child apparatus flag 41 from "parent apparatus (second flag)" to "child apparatus (first flag)" after updating of the setting information of the delegation destination apparatus is completed. Therefore, the parent/child apparatus flag 41 of the delegation destination apparatus transits in the order of "child apparatus (first flag)" → "parent apparatus (second flag)" → "child apparatus (first flag)."

**[Table 2]**

| | IP address | Port number |
|---|---|---|
| List of synchronization destination | 192.168.10.02 | xxxxx |
| | 192.168.10.03 | xxxxx |
| | 192.168.10.04 | xxxxx |
| | 192.168.10.05 | xxxxx |

Table 2 schematically illustrates information stored in the child apparatus information 43. The child apparatus information 43 includes, for example, internet protocol (IP) addresses and port numbers of the electronic information boards 2a to 2d used as the children apparatuses, which are transmission destinations of the setting information (synchronization destinations). The information stored in the child apparatus information 43 is preset by, for example, an administrator. The administrator sets the IP addresses and the port numbers of the electronic information boards 2a to 2d (children apparatuses) to be synchronized with the setting information of the electronic information board 2P (parent apparatus). Alternatively, the electronic information board 2P (parent apparatus) can search and find the electronic information board 2 disposed on the network using Simple Network Management Protocol (SNMP) and can set information of the found electronic information board 2 as the child apparatus information.

**[Table 3]**

| | |
|---|---|
| printer address | 192.168.10.01 |
| mail address book | mail2017_05_12.txt |
| contact list | Clist2017_06_12.txt |
| shared folder | file://.../hoge/ |
| template | template 1 |

Table 3 schematically illustrates an example of the setting information stored in the setting information DB 42. Since the setting information includes many items, Table 3 illustrates only a part of the setting information. Table 3 includes various items, such as a printer address, a mail address book, a contact list, a shared folder, and a template. The printer address is an IP address of a printer that can be used by the electronic information board 2. The mail address book is a list of e-mail address that can be transmitted from the electronic information board 2. The contact list is a list of another electronic information board 2 (e.g., IP address) to which one electronic information board 2 can communicate with. The shared folder is a common folder, in which the electronic information board 2 stores page data (e.g., stroke data for one screen) as common data. The template is image data (texture) of the background displayed on a display.

As above described, since the setting information includes the information that must be set to the electronic information board 2 by the administrator, the workload of the administrator for setting the setting information to each one of the electronic information boards 2 can be reduced by synchronizing the setting information at each one of the electronic information boards 2.

**[Table 4]**

| | | |
|---|---|---|
| synchronization time | 2018/01/15 | 17:30 |

Table 4 illustrates an example of the synchronization time 44. The synchronization time 44 is information of time when the setting information is synchronized at each of the electronic information boards 2. Therefore, even if the setting information is the same, the synchronization time 44 may be different at each one of the electronic information boards 2. As to the parent apparatus, the synchronization time 44 may correspond to the time when the setting information DB 42 is updated. The synchronization time 44 of the child apparatus can be any one of the time when the electronic information boards 2a to 2d (children apparatus) receives an inquiry of synchronization completion, the time when the setting information stored in the setting information DB 42 is updated, and the time between a time that receives the inquiry of synchronization completion and another time that the updating is performed. In the embodiment, it is assumed that the time when each of the electronic information boards 2a to 2d (children apparatus) has received the inquiry of synchronization completion is used as the synchronization time 44 of the child apparatus. With this configuration, even if the parent apparatus or the delegation destination apparatus checks or confirms whether the synchronization is completed at each of the children apparatuses between the time when the child apparatus receives the inquiry of synchronization completion and another time that the updating is performed at the child apparatus, the child apparatus can return a response that the child apparatus is already synchronized.

### Function Valid in Child Apparatus:

Hereinafter, a description is given of the functions that become valid in the child apparatus. The functions that become valid in the child apparatus include, for example, the setting unit 31, the parent/child change unit 33, the transmission/reception unit 34, and the storage unit 36. The function of the transmission/reception unit 34 of the child apparatus is similar to the function of the transmission/reception unit 34 of the parent apparatus, but in a case of the child apparatus, the reception unit 34b of one child apparatus may receive the setting information while the reception unit 34b of another child apparatus may receive the authority delegation notification.

The setting unit 31 updates the setting information by setting the setting information received from the parent apparatus to the setting information DB 42. If the child apparatus receives the authority delegation notification from the parent apparatus, the parent/child change unit 33 of the child apparatus changes a state of the parent/child apparatus flag 41 from "child apparatus (first flag)" to "parent apparatus (second flag)." Further, after completing the setting of the setting information in the child apparatus used as the delegation destination apparatus, the parent/child change unit 33 of the child apparatus used as the delegation destination apparatus changes the state of the parent/child apparatus flag 41 from "parent apparatus (second flag)" to "child apparatus (first flag)."

The parent/child apparatus flag 41 and the setting information DB 42 stored in the storage unit 36 of the child apparatus are same as the parent/child apparatus flag 41 and the setting information DB 42 stored in the parent apparatus, but the child apparatus information 43 is not stored in the storage unit 36 of the child apparatus because the child apparatus acquires the child apparatus information 43 from the parent apparatus.

Further, the functions that become valid in the delegation destination apparatus can be same as the child apparatus. Since the delegation destination apparatus does not determine the priority level of the children apparatuses in this example case, the function of the priority determination unit 32 is not required for the delegation destination apparatus. In the embodiment, the function of the priority determination unit 32 may not be required for the delegation destination apparatus because the authority delegation unit 35 of the delegation destination apparatus does not perform the delegation of the authority of the parent apparatus to another delegation destination apparatus. However, the delegation destination apparatus can be configured to delegate the authority of the parent apparatus to another child apparatus, in which the priority determination unit 32 and the authority delegation unit 35 become valid in the delegation destination apparatus.

Therefore, the delegation of the authority of the parent apparatus means that the authority to synchronize the setting information of the parent apparatus and the setting information of the child apparatus is delegated to the delegation destination apparatus, and the delegation of the authority of the parent apparatus may include the delegation of the function of the priority determination unit 32 and the function of the authority delegation unit 35 to the delegation destination apparatus.

### Operation:

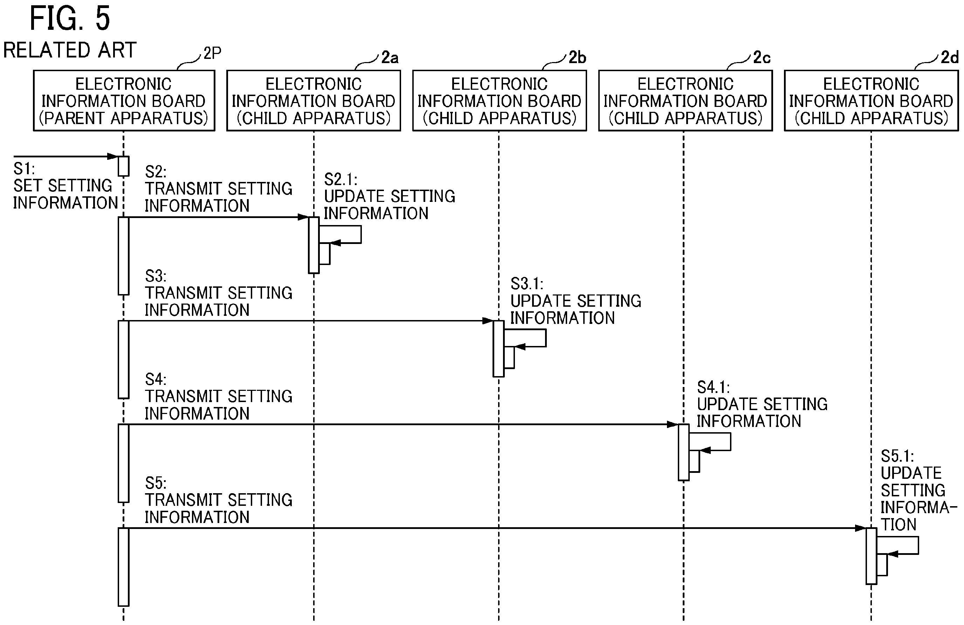

Hereinafter, a description is given of an operation procedure of transmitting the setting information to the child apparatus from the parent apparatus with reference to FIGs. 5 to 8. At first, for the comparison, an operation procedure of transmitting the setting information from one parent apparatus to all of the children apparatuses is described.

FIG. 5 is an example of a sequence diagram illustrating a procedure when one parent apparatus transmits the setting information to all of the children apparatuses.

S1: At first, an administrator sets the setting information to the electronic information board 2P used as the parent apparatus. The setting information input by the administrator is stored in the setting information DB 42 of the electronic information board 2P used as the parent apparatus.

S2: The parent apparatus detects that the setting information of setting information DB 42 is updated and starts synchronization of the setting information. Further, the synchronization of setting information can be started at a given pre-set time, an activation time, or the like. As to the parent apparatus, the transmission unit 34a acquires the child apparatus information 43 from the storage unit 36 and determines the child apparatus to be transmitted with the setting information in the order registered in the child apparatus information 43 (e.g., ascending order, descending order, randomly). In FIG. 5, the transmission unit 34a of the parent apparatus transmits the setting information, acquired from the setting information DB 42, to the determined electronic information board 2a.

S2.1: The reception unit 34b of the electronic information board 2a (child apparatus) receives the setting information from the parent apparatus, and then the setting unit 31 of the electronic information board 2a (child apparatus) sets the setting information in the setting information DB 42 of the electronic information board 2a (child apparatus) to update the setting information of the electronic information board 2a (child apparatus).

In response to the completion of transmitting the setting information to one child apparatus, the parent apparatus transmits the setting information to the next child apparatus.

S3: Then, the transmission unit 34a of the parent apparatus determines the child apparatus to be transmitted with the setting information in the order registered in the child apparatus information 43 and then transmits the setting information to the determined child apparatus, such as the electronic information board 2b, in an example case of FIG. 5.

S3.1: The reception unit 34b of the electronic information board 2b (child apparatus) receives the setting information from the parent apparatus, and then the setting unit 31 of the electronic information board 2b (child apparatus) sets the setting information in the setting information DB 42 of the electronic information board 2b (child apparatus) to update the setting information of the electronic information board 2b (child apparatus)

The sequence from steps S4 to S 5.1 is also performed similarly. After transmitting the setting information to all of the children apparatuses registered in child apparatus information 43, the parent apparatus determines that the synchronization of the setting information has been completed. Further, if there is a child apparatus that cannot be transmitted with the setting information because the power supply is turned OFF, the synchronization of the setting information is performed at the next synchronization timing.

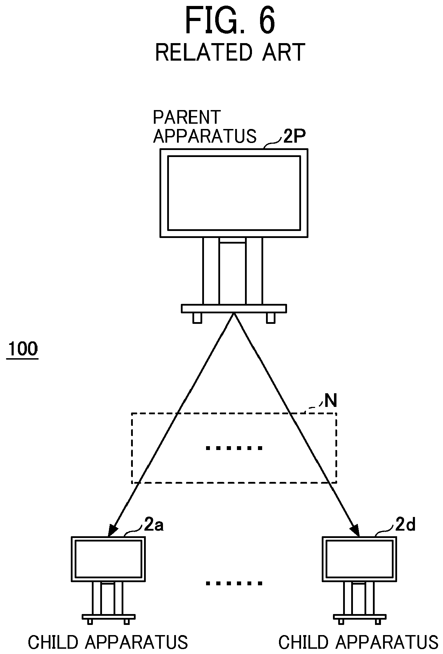

FIG. 6 is an example of a scheme of conventional synchronization method of the setting information. As indicated in the operation procedure illustrated in FIG. 5, the conventional synchronization method of the setting information increases the time to complete the synchronization in proportion to the number of children apparatuses.

Further, in conventional system, in addition to the longer time to complete the synchronization, the parent apparatus continues to be operated to transmit the setting information to all of the children apparatuses, with which the processing load of the parent apparatus and the processing load of the network connected to the parent apparatus become heavy.

Further, depending on the sequential order of synchronization of the setting information, the time to complete the synchronization vary among the children apparatuses, in which the child apparatus that is synchronized at first can be updated quickly, but the child apparatus that is synchronized later in the sequential order of synchronization of the setting information, the time to complete the synchronization becomes longer.

### Synchronization of Setting Information:

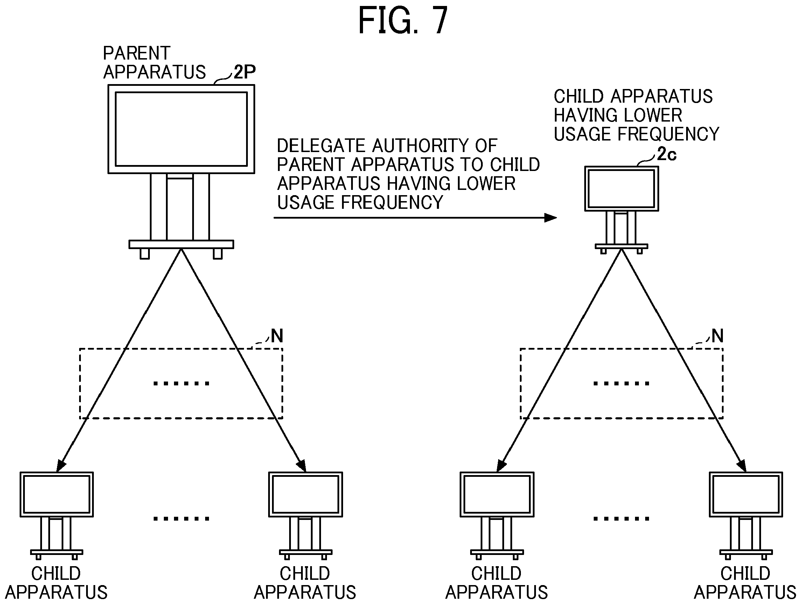

Hereinafter, a description is given of an operation procedure of synchronizing the setting information using the information synchronization system 100 with reference to FIG. 7. FIG. 7 is an example of a scheme of the synchronization of the setting information using the information synchronization system 100 according to the embodiment.

The parent apparatus determines the priority level of the child apparatus based on the usage frequency of the child apparatus, synchronizes the setting information with the child apparatus having a higher usage frequency with a higher priority level, and delegates the authority of the parent apparatus to one or more children apparatuses having a lower usage frequency, such as the children apparatus having the lowest usage frequency. With this configuration, the processing speed can be increased using the parallel processing and the processing load of the parent apparatus and the network connected to the parent apparatus can be reduced or dispersed.

At first, when an administrator sets the setting information to the parent apparatus, the parent apparatus refers to information of usage frequency information of all of the children apparatuses before starting the synchronization of setting information. An example of the usage frequency information is illustrated in Table 5.

**[Table 5]**

| Priority level | Electronic information board | Usage frequency (for one week) |
|---|---|---|
| 1 | Electronic information board 2a | 32 hours |
| 2 | Electronic information board 2b | 21 hours |
| 3 | Electronic information board 2d | 5 hours |
| 4 | Electronic information board 2c | 3 hours |

Table 5 illustrates an example of the usage frequency information. The usage frequency information is, for example, information aggregating the used time per day over a given period of time (e.g., one week). The used time may mean that the function of the electronic information board 2 is set in the activated state regardless of whether or not a user actually used the function of the electronic information board 2. The priority determination unit 32 of the parent apparatus acquires the usage frequency information over the given period of recent time (e.g., one week, one month). The usage frequency information can be sorted in a descending order, and in an example case of Table 5, it is determined that the priority level descends in the order from the electronic information boards 2a, 2b, 2d, and 2c, in which the electronic information boards 2a is set with the highest priority level.

Further, the usage frequency information can be the number of used times over the given period of time. The number of used times is, for example, the number of times the power button is turned ON and the electronic information board 2 is activated. Alternatively, the usage frequency information can be a past cumulative usage time or a past cumulative number of used times instead of the used time over the recent given period of time or the number of used times over the recent given period of time. That is, the usage frequency information can be defined as the used time or the number of used times of the electronic information board 2, which are counted from the factory shipment to the current day.

The description is continued by referring FIG. 7 again. The priority determination unit 32 of the parent apparatus sorts the children apparatuses in the descending order of usage frequency information and determines the priority level of the children apparatuses in the sorted order (i.e., descending order). Further, the usage frequency information of the children apparatuses can be collected by the parent apparatus before starting the synchronization. For example, when the child apparatus is activated each time, the usage frequency information of the child apparatus can be transmitted to the parent apparatus. With this configuration, the time required to synchronize the setting information can be set shorter.

Then, the priority determination unit 32 of the parent apparatus determines the child apparatus having the lowest priority level (lowest usage frequency) as the electronic information board (i.e., delegation destination apparatus) to be delegated with the authority of the parent apparatus. In an example case of Table 5, the electronic information board 2c becomes the delegation destination apparatus to which the authority of the parent apparatus is delegated from the parent apparatus.

Further, the number of the delegation destination apparatus (electronic information boards 2) to which the authority of the parent apparatus is delegated from the parent apparatus can be two or more. For example, if the upper limit number of children apparatuses that can be synchronized with the setting information of one electronic information board 2 (parent apparatus or delegation destination apparatus) is a given pre-set number, the priority determination unit 32 determines one delegation destination apparatus based on the given pre-set number. The priority determination unit 32 of the parent apparatus determines the delegation destination apparatus in the ascending order starting from the lowest priority level (lowest usage frequency).

Based on the priority level determined by the priority determination unit 32, the parent apparatus and the delegation destination apparatus start the synchronization of the setting information in the descending order starting from the child apparatus having the highest priority level. To prevent the parent apparatus and the delegation destination apparatus from transmitting the setting information to the same child apparatus, the parent apparatus and the delegation destination apparatus transmits the inquiry of synchronization completion whether the child apparatus is already synchronized before transmitting the setting information to the child apparatus, in which the parent apparatus and the delegation destination apparatus check whether the child apparatus is already synchronized. If the child apparatus is not yet synchronized, the parent apparatus or the delegation destination apparatus transmits the setting information to the child apparatus, and if the child apparatus is already synchronized, the parent apparatus or the delegation destination apparatus performs the synchronization of the setting information to the next child apparatus.

After completing the synchronization of the setting information for all of the child apparatus except for the delegation destination apparatus, the delegation destination apparatus updates the setting information DB 42 of the delegation destination apparatus using the setting information acquired from the parent apparatus, and changes the parent/child apparatus flag 41 from "parent apparatus (second flag)" to "child apparatus (first flag)" to return to the normal state of the child apparatus.

By performing the above described processing, the time required to synchronize the setting information can be reduced by performing the parallel or concurrent processing of the setting information, and the processing load of the parent apparatus and the processing load of the network connected to the parent apparatus can be reduced.

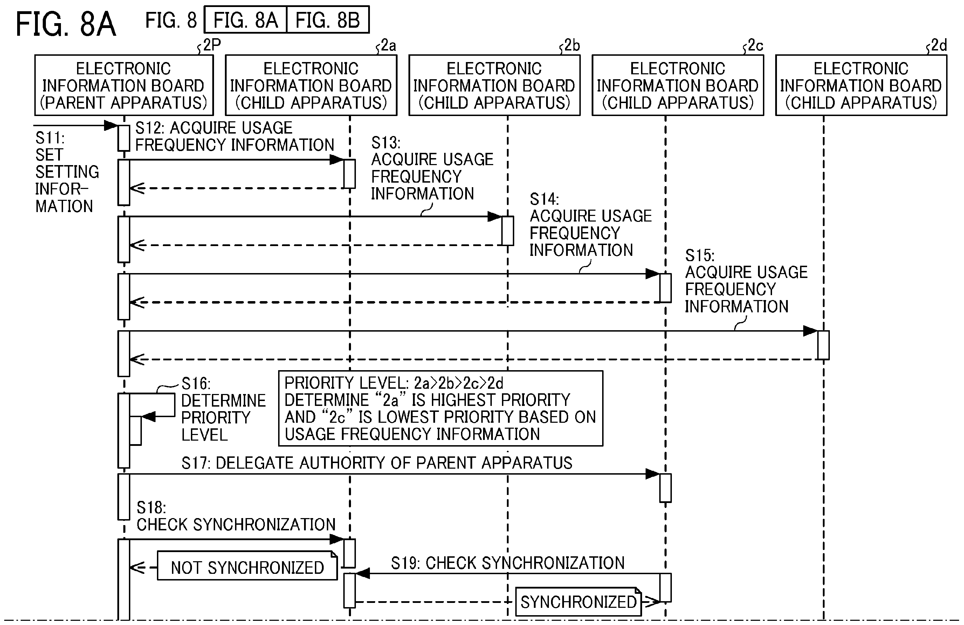

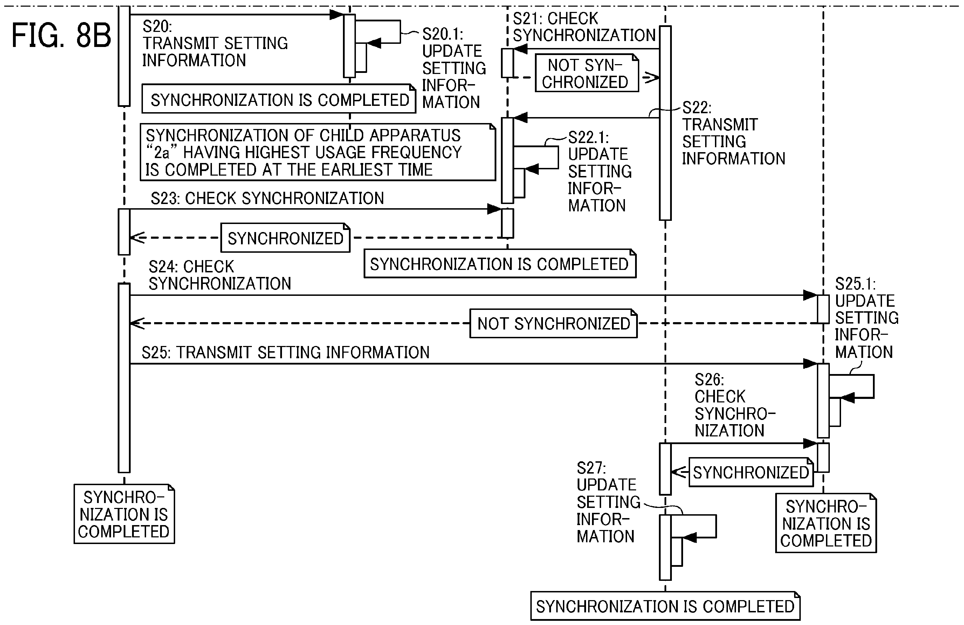

FIGs. 8A and 8B (FIG. 8) are an example of a sequence diagram illustrating a synchronization procedure of the setting information using the information synchronization system 100 according to the embodiment.

S11: At first, an administrator sets the setting information to the electronic information board 2P used as the parent apparatus. The setting information input by the administrator is stored in setting information DB 42 of the parent apparatus. Further, the synchronization time 44 of the parent apparatus is updated to the current time. The administrator inputs the setting information to the parent apparatus alone in the same manner of conventional method, and thereby the workload of the administrator does not increase in the embodiment.

S12: When the parent apparatus detects the updating of the setting information in the setting information DB 42, the priority determination unit 32 of the parent apparatus requests the child apparatus (e.g., electronic information board 2a), registered in the child apparatus information 43, to transmit the usage frequency information of the child apparatus (e.g., electronic information board 2a) via the transmission/reception unit 34. The sequential order of requesting the usage frequency information to the children apparatuses can be the registration order of the children apparatuses registered in the child apparatus information 43, such as ascending order, descending order, or randomly.

S13 to S15: The priority determination unit 32 of the parent apparatus refers to the child apparatus information 43 to further request the electronic information boards 2b to 2d (children apparatuses) to transmit the usage frequency information.

S16: The priority determination unit 32 of the parent apparatus sorts the collected usage frequency information of the children apparatuses to determine the priority level of the children apparatuses in the descending order starting from the highest usage frequency. Then, the priority determination unit 32 of the parent apparatus determines the child apparatus having the lowest priority level as the delegation destination apparatus. In FIG. 8, it is assumed that the electronic information board 2c is determined as the delegation destination apparatus.

S17: The authority delegation unit 35 of the parent apparatus transmits the authority delegation notification to the delegation destination apparatus (i.e., electronic information board 2c) via the transmission/reception unit 34. The authority delegation notification includes, for example, the setting information, the child apparatus information 43, the priority information, and the synchronization time 44. Then, the setting unit 31 of the electronic information board 2c (i.e., delegation destination apparatus) updates the synchronization time stored in the setting information DB 42 of the electronic information board 2c using the current time.

In principle, the delegation destination apparatus may not refuse to receive the delegation of authority transmitted from the parent apparatus, but the delegation destination apparatus may refuse to receive the authority delegation if the user is using the delegation destination apparatus. In this case, the priority determination unit 32 of the parent apparatus determines another child apparatus having the second lowest priority level as the delegate destination apparatus. When the electronic information board 2c receive the authority delegation, the parent/child change unit 33 of the electronic information board 2c changes the parent/child apparatus flag 41 from "child apparatus (first flag)" to "parent apparatus (second flag)." This enables the functions of the parent apparatus in the electronic information board 2c. In this way, the parent apparatus and the delegation destination apparatus start the synchronization of setting information.

S18: The transmission unit 34a of the parent apparatus starts the synchronization of the setting information. The transmission unit 34a of the parent apparatus determines the child apparatus (e.g., electronic information board 2) to be synchronized with the setting information in the descending order of the priority level determined by the priority determination unit 32. At first, the transmission unit 34a inquires the determined electronic information board 2a whether the electronic information board 2a is already synchronized with the setting information. The synchronization check inquiry includes, for example, the synchronization time 44 of the parent apparatus.

The transmission unit 34a of the electronic information board 2a (child apparatus) compares the synchronization time 44 acquired from the parent apparatus and the synchronization time 44 stored in the storage unit 36 of the electronic information board 2a (child apparatus), and then determines that the electronic information board 2a is not yet synchronized if the synchronization time 44 acquired from the parent apparatus is newer than the synchronization time 44 stored in the storage unit 36 of the electronic information board 2a. Therefore, the transmission unit 34a of the electronic information board 2a transmits a not-synchronized signal to the parent apparatus. Further, the setting unit 31 of the electronic information board 2a updates the synchronization time 44 stored in the setting information DB 42 of the electronic information board 2a using the current time.

S19: Further, in order to start the synchronization of the setting information, the transmission unit 34a of the delegation destination apparatus determines the child apparatus to be transmitted with the setting information in the descending order set in the priority level information in the same manner as the parent apparatus, in which the transmission unit 34a of the delegation destination apparatus determines the electronic information board 2a. Then, the transmission unit 34a of the delegation destination apparatus inquires the determined electronic information board 2a whether the electronic information board 2a is already synchronized with the setting information. The synchronization check inquiry includes, for example, the synchronization time 44 acquired from the parent apparatus.

It is preferable that the parent apparatus and the delegation destination apparatus synchronize the children apparatuses in the descending order, which is started from the highest priority level, but the parent apparatus and the delegation destination apparatus can be configured to synchronize the children apparatuses in an order different from the descending order starting from the highest priority level. This is because the number of children apparatuses to be synchronized with the setting information of the parent apparatus becomes about a half of conventional method, and thereby the time to complete the synchronization of the setting information of all of the children apparatuses becomes about a half of the conventional method.

At the stage of step S19, the electronic information board 2a has already started the synchronization with the parent apparatus (i.e., the electronic information board 2a is being inquired whether the electronic information board 2a is already synchronized from the parent apparatus). The transmission unit 34a of the electronic information board 2a determines that the electronic information board 2a is already synchronized because the synchronization time 44 of the electronic information board 2a is newer than the synchronization time 44 of the parent apparatus transmitted from the delegation destination apparatus. Therefore, the transmission unit 34a of the electronic information board 2a transmits the synchronization completion message to the delegation destination apparatus.

S20: The transmission unit 34a of the parent apparatus transmits the setting information to the electronic information board 2a.

S20.1: The reception unit 34b of the electronic information board 2a receives the setting information from the parent apparatus, and then the setting unit 31 of the electronic information board 2a updates the setting information DB 42 using the setting information acquired from the parent apparatus. Thus, the synchronization of the setting information of the electronic information board 2a is completed. Accordingly, the setting information can be updated from the electronic information board 2 having the highest usage frequency.

S21: The delegation destination apparatus determines a child apparatus having the second highest priority level after the electronic information board 2a based on the priority level information acquired from the parent apparatus. In FIG. 8, it is assumed that the electronic information board 2b is determined as the child apparatus having the second highest priority level. The transmission unit 34a of the delegation destination apparatus inquires the determined child apparatus (i.e., electronic information board 2b) whether the child apparatus (i.e., electronic information board 2b) is already synchronized. The synchronization check inquiry includes, for example, the synchronization time 44 acquired from the parent apparatus.

At the stage of step S21, the electronic information board 2b has not yet started the synchronization with the parent apparatus. Since the synchronization time 44 of the electronic information board 2b is older than the synchronization time 44 transmitted from the delegation destination apparatus, the transmission unit 34a of the electronic information board 2b determines that the electronic information board 2b is not yet synchronized. Therefore, the transmission unit 34a of the electronic information board 2b transmits the not-synchronized signal to the delegation destination apparatus. Further, the setting unit 31 of the electronic information board 2b updates the synchronization time stored in the setting information DB 42 of the electronic information board 2b using the current time.

S22: Since the reception unit 34b of the delegation destination apparatus receives the not-synchronized signal from the electronic information board 2b, the transmission unit 34a of the delegation destination apparatus transmits the setting information to the electronic information board 2b.

S22.1: The reception unit 34b of the electronic information board 2b receives the setting information from the delegation destination apparatus, and then the setting unit 31 of the electronic information board 2b updates the setting information in the setting information DB 42 using the setting information acquired from the delegation destination apparatus. Thus, the synchronization of the setting information of the electronic information board 2b is completed. Accordingly, the setting information of the electronic information board 2b having the second highest usage frequency can be updated.

S23: The parent apparatus inquires the electronic information board 2b whether the electronic information board 2b is already synchronized, in which the electronic information board 2b has already started the synchronization with the delegation destination apparatus. The transmission unit 34a of the electronic information board 2b determines that the electronic information board 2b is already synchronized because the synchronization time 44 of the electronic information board 2b is newer than the synchronization time 44 transmitted from the parent apparatus. Therefore, the transmission unit 34a of the electronic information board 2b transmits the synchronization completion message to the parent apparatus.

S24: Since the transmission unit 34a of the parent apparatus determines that the electronic information boards 2a and 2b are already synchronized in accordance with the descending order of the priority level, the transmission unit 34a of the parent apparatus determines a child apparatus (e.g., electronic information board 2d) having the third highest priority level (the next priority level after the second priority level) as the synchronization destination. At first, the transmission unit 34a of the parent apparatus inquires the determined child apparatus (e.g., electronic information board 2d) whether the determined child apparatus (e.g., electronic information board 2d) is already synchronized. The synchronization check inquiry includes, for example, the synchronization time 44 of the parent apparatus.

Then, the transmission unit 34a of the electronic information board 2d compares the synchronization time 44 acquired from the parent apparatus and the synchronization time 44 stored in the storage unit 36 of the electronic information board 2d, and then determines that the electronic information board 2d is not yet synchronized if the synchronization time 44 acquired from the parent apparatus is newer than the synchronization time 44 stored in the storage unit 36 of the electronic information board 2d. Therefore, the transmission unit 34a of the electronic information board 2d transmits the not-synchronized signal to the parent apparatus. Further, the setting unit 31 of the electronic information board 2d updates the synchronization time stored in the setting information DB 42 of the electronic information board 2d using in the current time.

S25: The transmission unit 34a of the parent apparatus transmits the setting information to the electronic information board 2d.

S25.1: The reception unit 34b of the electronic information board 2d receives the setting information from the parent apparatus, and then the setting unit 31 of the electronic information board 2d updates the setting information stored in the setting information DB 42 using the setting information acquired from the parent apparatus. Thus, the synchronization of the setting information of the electronic information board 2d is completed. If the child apparatus that is not yet synchronized in the priority level information becomes only the delegation destination apparatus, the transmission unit 34a of the parent apparatus completes the synchronization process. This is because the setting information is already transmitted to the delegation destination apparatus. Further, the parent apparatus records information of the delegation destination apparatus that has been delegated with the authority of the parent apparatus.

S26: When the synchronization of electronic information board 2b having the second highest priority level is completed, the delegation destination apparatus also determines the child apparatus (e.g., electronic information board 2d in FIG. 8) to be synchronized with the setting information based on the priority level information. The transmission unit 34a of the delegation destination apparatus inquires the determined child apparatus (e.g., electronic information board 2d) whether the child apparatus (e.g., electronic information board 2d) is already synchronized. The synchronization check inquiry includes, for example, the synchronization time 44 acquired from the parent apparatus.

At the stage of step S26, the electronic information board 2d has already started the synchronization with the parent apparatus. The transmission unit 34a of the electronic information board 2d determines that the electronic information board 2d is already synchronized because the synchronization time 44 of the electronic information board 2d is newer than the synchronization time 44 acquired from the delegation destination apparatus. Therefore, the transmission unit 34a of the electronic information board 2d transmits the synchronization completion message to the delegation destination apparatus.

S27: The delegation destination apparatus determines the next child apparatus to be transmitted with the setting information based on the priority level information. When the synchronization of all other children apparatuses is completed, the delegation destination apparatus becomes the last apparatus, in which the transmission unit 34a of the delegation destination apparatus determines that the setting information of the delegation destination apparatus is to be synchronized with the setting information of all other children apparatuses. By comparing the IP address of the delegation destination apparatus and the IP addresses in the child apparatus information 43, the delegation destination can detect that only the delegation destination apparatus has not yet completed the synchronization. Since the setting information is already received from the parent apparatus, the setting unit 31 of the delegation destination apparatus updates the setting information stored in the setting information DB 42 using the setting information acquired from the parent apparatus. Thus, the synchronization of setting information of electronic information board 2c is completed.

Then, the parent/child change unit 33 of the electronic information board 2c returns the parent/child apparatus flag 41 from "parent apparatus (second flag)" to "child apparatus (first flag)." This disables the functions of the parent apparatus from the electronic information board 2c.

Further, even if a plurality of delegation destination apparatuses is determined, there is no change in the processing of the parent apparatus and the delegation destination apparatuses. At first, with respect to the parent apparatus, the parent apparatus synchronizes the setting information in line with the priority level except for the delegation destination apparatuses. One delegation destination apparatus synchronizes the setting information with the children apparatus in line with the priority level, and another delegation destination apparatus exists in the priority level of the children apparatuses. However, since another delegation destination apparatus updates the synchronization time at the time of receiving the authority delegation notification, when another delegation destination receives the synchronization check inquiry from the one delegation destination apparatus, another delegation destination apparatus returns the synchronization completion message to the one delegation destination apparatus. Therefore, the one delegation destination apparatus does not update the setting information of another delegation destination apparatus, and there is no change in the processing of the delegation destination apparatus.

### Processing in Parent Apparatus:

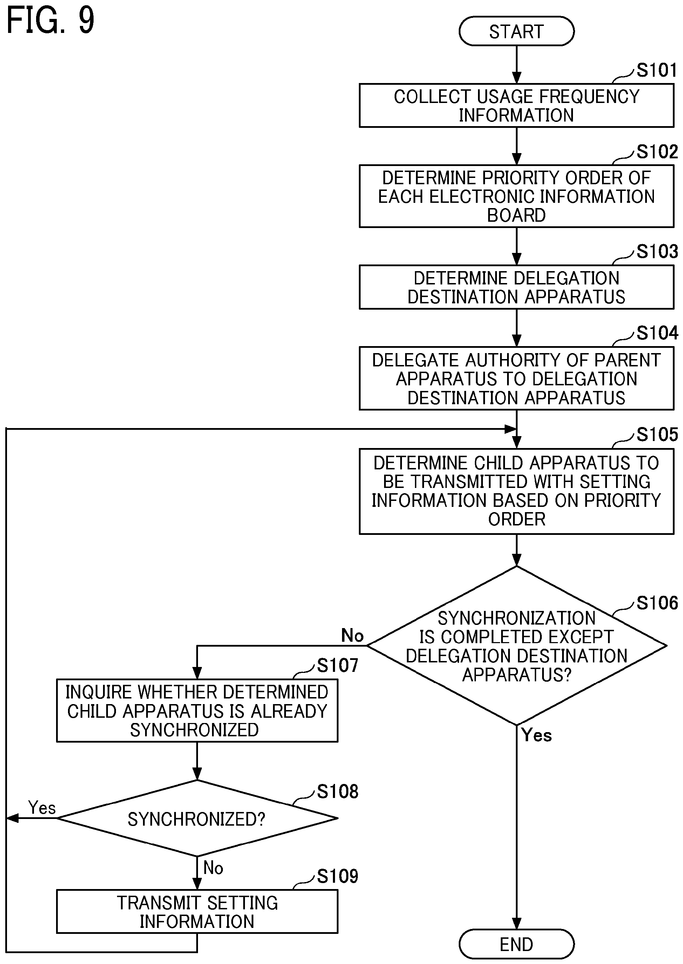

Hereinafter, the processing in the parent apparatus is described with reference to FIG. 9. FIG. 9 is an example of a flowchart illustrating a process when the parent apparatus synchronizes the setting information. The sequence in FIG. 9 starts when an administrator sets the setting information to the parent apparatus.

At first, the priority determination unit 32 of the parent apparatus collects the usage frequency information from all of the children apparatuses registered in the child apparatus information 43 (S101).

Then, the priority determination unit 32 of the parent apparatus sorts the usage frequency information collected from the children apparatuses and determines the priority level of each one of the electronic information boards 2 in the descending order starting from the highest usage frequency information (S102).

Then, the priority determination unit 32 of the parent apparatus determines the child apparatus having the lowest priority level (i.e., lowest usage frequency information) as the delegate destination apparatus (S103). Further, the priority determination unit 32 of the parent apparatus can determine a plurality of the children apparatuses as the delegation destination apparatuses.

Then, the authority delegation unit 35 of the parent apparatus delegates the authority of the parent apparatus to the delegation destination apparatus (S104). That is, the authority delegation unit 35 of the parent apparatus transmits the setting information, the child apparatus information 43, the priority level information, and the synchronization time 44 to the delegation destination apparatus together with the authority delegation notification.

Then, the transmission unit 34a of the parent apparatus determines the child apparatus to be transmitted with the setting information in the descending order starting from the highest priority level (S105).

If the child apparatus to be transmitted with the setting information is only the delegation destination apparatus (S106: YES), the synchronization process performed by the parent apparatus is completed, and thereby the sequence of FIG. 9 is completed.

If the child apparatus to be transmitted with the setting information still exists other than the delegation destination apparatus (S106: NO), the transmission unit 34a of the parent apparatus inquires the determined child apparatus whether the determined child apparatus is already synchronized (S107).

The transmission unit 34a of the parent apparatus determines whether the response returned from the determined child apparatus is a synchronized signal indicating that the determined child apparatus is already synchronized or a not-synchronized signal indicating that the determined child apparatus is not yet synchronized (S108).

If the child apparatus is not yet synchronized (S108: NO), the transmission unit 34a of the parent apparatus transmits the setting information to the child apparatus determined in step S105 (S109).

If the child apparatus is already synchronized (S108: YES) or after step S109, the sequence returns to step S105 and the transmission unit 34a synchronizes the setting information with the child apparatus having the next highest priority level.

### Processing in Delegation Destination Apparatus:

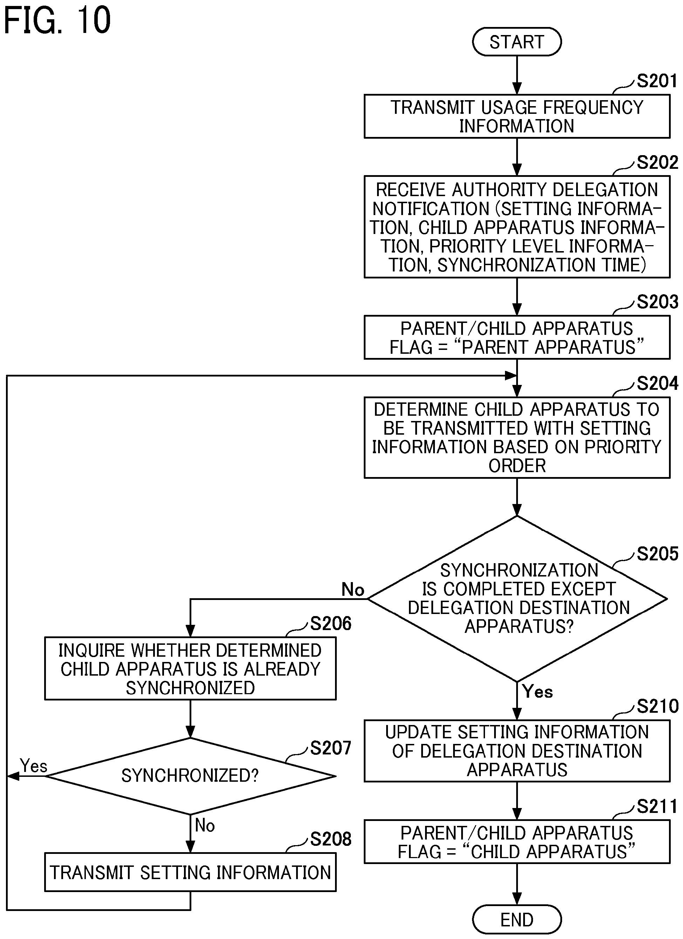

Hereinafter, the processing in the delegation destination apparatus is described with reference to FIG. 10. FIG. 10 is an example of a flowchart illustrating a process when the delegation destination apparatus synchronizes the setting information. The sequence in FIG. 10 starts when the delegation destination apparatus acquires a request of the usage frequency information from the parent apparatus.

At first, the transmission unit 34a of the delegation destination apparatus transmits the usage frequency information to the parent apparatus (S201).

When the parent apparatus determines the child apparatus as the delegation destination apparatus, the reception unit 34b of the delegation destination apparatus receives the authority delegation notification (setting information, child apparatus information 43, priority level information, and synchronization time 44) from the parent apparatus (S202).

Then, the parent/child change unit 33 of the delegation destination apparatus changes the parent/child apparatus flag 41 from "child apparatus (first flag)" to "parent apparatus (second flag) (S203). This enables the functions of the parent apparatus in the delegation destination apparatus.

Then, the transmission unit 34a of the delegation destination apparatus determines to transmit the setting information to the child apparatus along the sequence of steps S204 to S208. The sequence of steps S204 to S208 is similar to the sequence of steps S105 to S109 in FIG. 9.

In step S205, if the child apparatus to be transmitted with the setting information is only the delegation destination apparatus (S205: YES), the setting unit 31 of the delegation destination apparatus updates the setting information stored in the setting information DB 42 of the delegation destination apparatus using the setting information acquired from the parent apparatus (S210).

Then, the parent/child change unit 33 of the delegation destination apparatus returns the parent/child apparatus flag 41 from "parent apparatus (second flag)" to "child apparatus (first flag)" (S211). This disables the functions of the parent apparatus from the delegation destination apparatus.

As to the above described information synchronization system 100 of the embodiment, the electronic information board 2P (parent apparatus) and the electronic information board 2c (delegation destination apparatus) can transmit the setting information to other electronic information boards 2a, 2b, and 2d in parallel or concurrently, with which the time required for synchronizing the setting information of the parent apparatus with all of the electronic information boards 2a to 2d can be shortened. Further, since the number of children apparatuses to be synchronized with the setting information by the parent apparatus becomes about a half of conventional methods, the processing load of the electronic information board 2P used as the parent apparatus and the processing load of the network connected to the electronic information board 2P can be reduced.

Numerous additional modifications and variations are possible in light of the above teachings. It is therefore to be understood that, within the scope of the appended claims, the disclosure of this patent specification may be practiced otherwise than as specifically described herein.

### Child Apparatus Information transmitted to Delegation Destination Apparatus from Parent Apparatus:

As to the authority delegation notification, the child apparatus information 43 of all of the children apparatuses stored in the parent apparatus is transmitted to the delegation destination apparatus, but not limited thereto. For example, the child apparatus information 43 of the children apparatuses, assigned only to the delegation destination apparatus, can be transmitted to the delegation destination apparatus.

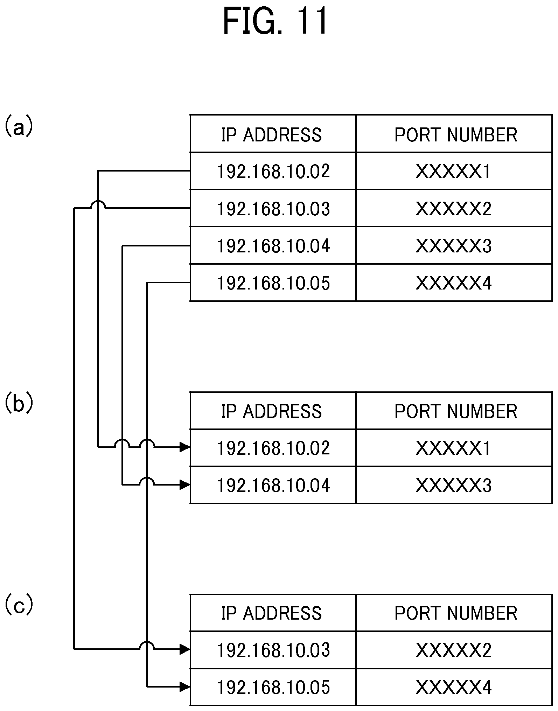

FIG. 11 illustrates an example of the child apparatus information 43 transmitted to the delegation destination apparatus from the parent apparatus. FIG. 11(a) illustrates an example of the child apparatus information 43 set in the parent apparatus by an administrator. For the convenience of description, the child apparatus information 43 in FIG. 11(a) is sorted in line with the priority level. In this example case, the authority delegation unit 35 of the parent apparatus extracts communication information of FIG. 11(a) from the highest priority level, such as one set of one information having the highest priority level and one information having the third highest priority level, and another set of one information having the second highest priority level and one information having the fourth highest priority level to divide the child apparatus information 43 into two sets.

FIGs. 11(b) and 11(c) illustrate examples of the divided child apparatus information 43. In FIG. 11(b), the information of the children apparatuses having the highest priority level and the third highest priority level are extracted, and in FIG. 11(c), the information of the children apparatuses having the second highest priority level and the fourth highest priority level are extracted. The parent apparatus retains the child apparatus information 43 of FIG. 11(b) while the parent apparatus transmits the child apparatus information 43 of FIG. 11(c) to the delegation destination apparatus.

In this example case, since the parent apparatus and the delegation destination apparatus transmit the transmission information to the children apparatuses registered in the child apparatus information 43 of the respective parent apparatus and the delegation destination apparatus alone, it is possible to reduce unnecessary synchronization check inquiry, with which the increase in the communication processing load can be reduced, and the time required for setting the setting information at all of the children apparatuses can be reduced.

Further, instead of extracting every other information of the child apparatus information 43 from the highest priority level, the child apparatus information 43 can be divided into two groups such as a higher priority level group and a lower priority level group, or the child apparatus information 43 can be divided randomly.

Further, if the number of children apparatuses is greater, the child apparatus information 43 can be divided into three or more groups.

### Configuration of Another Electronic Information Board:

The electronic information board 2 having a large touch panel is described in the above embodiment, but the electronic information board 2 is not limited thereto.

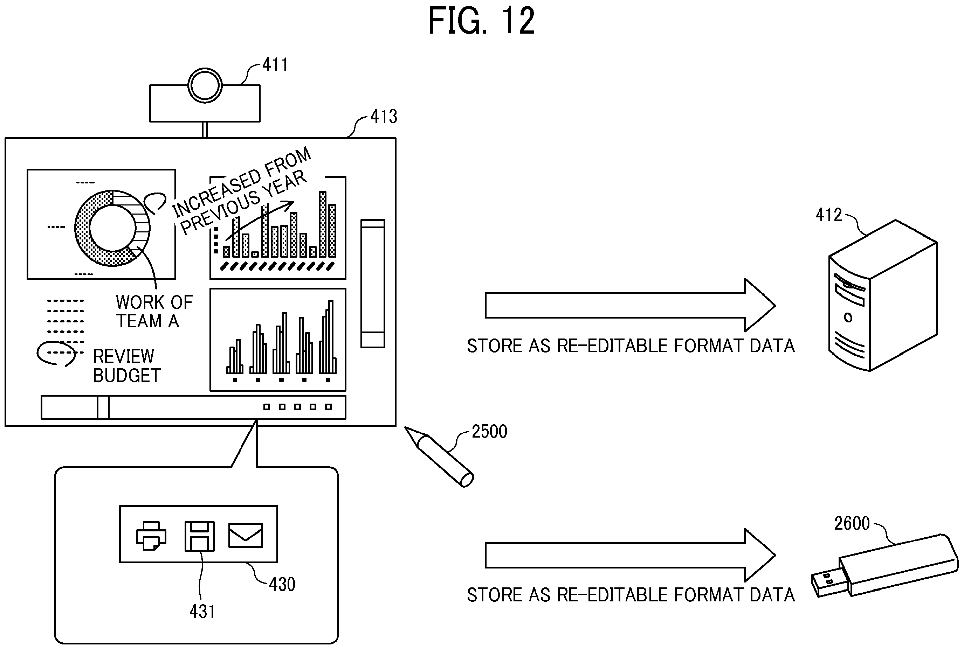

FIG. 12 illustrates another example of a configuration of the electronic information board 2. In an example case in FIG. 12, a projector 411 is disposed at an upper side of a normal whiteboard 413. The projector 411 corresponds to the electronic information board 2. The normal whiteboard 413 is not a flat panel display that is integrated with a touch panel, but the normal whiteboard 413 is a whiteboard that allows a user to write directly by a marker. Further, the whiteboard can be a blackboard, and the whiteboard can be a flat plane that can project images.

The projector 411 has an ultrashort focal point optical system and can project an image having less distortion from about 10-cm distance from the normal whiteboard 413. The image may be transmitted from a PC connected wirelessly or wired and may be stored in the projector 411.

A user draws handwriting images on the normal whiteboard 413 using an electronic pen 2500. The electronic pen 2500 has a light emitting unit at one end portion, in which when the user presses the electronic pen 2500 on the normal whiteboard 413 for handwriting, a switch is turned on and then the light emitting unit emits the light. The wavelength of light is near infrared and infrared so that the light is invisible to eyes of the user. The projector 411 includes a camera, which captures a portion where the light emits as an image and analyzes the image to specify the direction of the electronic pen 2500. The electronic pen 2500 further emits an acoustic wave with the emission of light, and the projector 411 calculates a distance to the electronic pen 2500 based on the arrival time of the acoustic wave. The position of the electronic pen 2500 can be identified from the calculated direction and distance, and then a stroke is drawn (projected) at the position of the electronic pen 2500.

Since the projector 411 projects a menu 430, when the user presses a button with the electronic pen 2500, the projector 411 specifies the pressed button based on the position of the electronic pen 2500 and an ON signal of the switch. For example, when a save button 431 is pressed, a stroke (a set of coordinates) written by the user is stored in the projector 411. The projector 411 stores handwriting information in a server 412, a USB memory 2600, or the like. The handwriting information is stored page by page basis. Since the handwriting information is saved as coordinates rather than the image data, the handwriting information can be re-edited by the user.

The functions in the above described embodiment can be implemented by circuitry and one or more processing circuits. The processing circuit includes one or more processors programmed to perform each function by software, such as a processor implemented by an electronic circuit, an application specific integrated circuit (ASIC), a digital signal processor (DSP), a field programmable gate array (FPGA), a system on chip (SOC), a graphics processing unit (GPU), a conventional circuit module, and the like designed to perform each of the functions described above.

Further, the information processing apparatus to be synchronized with the setting information is not limited to the electronic information board 2. The above described embodiment can be applied to any information processing apparatus that can be synchronized with the setting information. For example, the above described embodiment can be applied to any image forming apparatus (e.g., copier, printer, scanner, multi-function peripherals), any network camera (including all-weather camera, omnidirectional camera), any production printing machine (e.g., commercial printing machine), projectors, teleconference terminals, or the like. The above described embodiment can be also applied to game consoles, head-mounted displays, car navigation systems, digital cameras, drones, or the like.

In the above described embodiment, whether the synchronization is already performed is determined based on the synchronization time, but whether the synchronization is already performed can be determined based the identification information of the setting information. For example, when the parent apparatus is set with new setting information, the parent apparatus generates the identification information that does not overlap with the past identification information and then transmits the generated identification information to the child apparatus together with the new setting information. Therefore, the child apparatus can determine that the child apparatus is already synchronized if the identification information of the setting information of the child apparatus is identical with the identification information of the new setting information of the parent apparatus, and can determine that the setting information of the child apparatus is not yet synchronized if the identification information of the setting information of the child apparatus is not identical with the identification information of the new setting information transmitted from the parent apparatus.

Further, the delegation destination apparatus (first delegation destination apparatus) can delegate the authority to another child apparatus (second delegation destination apparatus). In this case, the parent apparatus, the first delegation destination apparatus and the second delegation destination apparatus can transmit the setting information to one or more children apparatuses based on the priority level of the children apparatuses.

As to the above described embodiments, the information synchronization system, the method of synchronizing setting information, and the information processing apparatus that can shorten the time required to synchronize the setting information for a plurality of information processing apparatuses can be provided.

Further, the priority determination unit 32 is an example of the determination means. The authority delegation unit 35 is an example of the processing request transmission means. The transmission unit 34a of the parent apparatus is an example of the first synchronization means. The reception unit 34b of the delegation destination apparatus is an example of the reception means. The parent/child change unit 33 is an example of the function change means. The transmission unit 34a of the delegation destination apparatus is an example of the second synchronization means. The transmission unit 34a of the child apparatus is an example of the response means. The setting unit 31 is an example of the updating means. The synchronization time of the parent apparatus is referred to as first date information. The synchronization time of the child apparatus is referred to as second date information.

Numerous additional modifications and variations are possible in light of the above teachings. It is therefore to be understood that, within the scope of the appended claims, the disclosure of this patent specification may be practiced otherwise than as specifically described herein.

Any one of the above-described operations may be performed in various other ways, for example, in an order different from the one described above.

As described above, the present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information synchronization system comprising:
a first information processing apparatus (2P) that is to synchronize setting information related to settings of the first information processing apparatus (2P); and
a plurality of second information processing apparatuses (2a, 2b, 2c, 2d, 2n) that are to be synchronized with the setting information set to the first information processing apparatus (2P), the plurality of second information processing apparatuses (2a, 2b, 2c, 2d, 2n) being registered to registration information,
wherein the first information processing apparatus (2P) includes a first processor (201) configured to
determine a delegation destination apparatus (2c) from the plurality of second information processing apparatuses (2a, 2b, 2c, 2d, 2n) registered to the registration information based on a preset condition, the delegation destination apparatus (2c) is delegated from the first information processing apparatus (2P) authority to perform a synchronization of the setting information to one or more other second information processing apparatuses of the plurality of second information processing apparatuses (2a, 2b, 2d, 2n);
transmit the setting information, the registration information, and a request for processing related to synchronization of the setting information to the determined delegation destination apparatus (2c); and
transmit the setting information to the one or more other second information processing apparatuses (2a, 2b, 2d, 2n) registered to the registration information to synchronize the setting information with the one or more other second information processing apparatuses (2a, 2b, 2d, 2n),
wherein the delegation destination apparatus (2c) includes a second processor (201) configured to
receive the setting information, the registration information, and the request for processing related to the synchronization of the setting information from the first information processing apparatus (2P);
in response to receiving the request for processing related to the synchronization of the setting information from the first information processing apparatus (2P), change a first flag indicating that the delegation destination apparatus (2c) does not perform the synchronization of the setting information to the one or more other second information processing apparatuses (2a, 2b, 2d, 2n) to a second flag indicating that the delegation destination apparatus (2c) performs the synchronization of the setting information to the one or more other second information processing apparatuses (2a, 2b, 2d, 2n); and
transmit the setting information received from the first information processing apparatus (2P) to the one or more other second information processing apparatuses (2a, 2b, 2d, 2n) registered to the registration information to synchronize the setting information with the one or more other second information processing apparatuses (2a, 2b, 2d, 2n).

2. The information synchronization system according to claim 1,
wherein the first processor (201) and the second processor (201) each perform the synchronization of the setting information to the one or more other second information processing apparatuses (2a, 2b, 2d, 2n) registered to the registration information concurrently.

3. The information synchronization system according to claim 2,
wherein, before the first processor (201) and the second processor (201) transmit the setting information, the first processor (201) and the second processor (201) each transmit first date information indicating when the setting information is set in the first information processing apparatus (2P) to the one or more other second information processing apparatuses (2a, 2b, 2d, 2n),
wherein, if second date information indicating when the setting information is synchronized at the one or more other second information processing apparatuses (2a, 2b, 2d, 2n) is older than the first date information, the one or more other second information processing apparatuses (2a, 2b, 2d, 2n) transmit to the first information processing apparatus (2P) or the delegation destination apparatus (2c) that the one or more of other second information processing apparatuses (2a, 2b, 2d, 2n) are not yet synchronized with the setting information set in the first information processing apparatus (2P).

4. The information synchronization system according to any one of claims 1 to 3,
wherein when the first processor (201) acquires information on usage frequency from the plurality of second information processing apparatuses (2a, 2b, 2c, 2d, 2n) registered to the registration information, the first processor (201) determines a priority level of the plurality of second information processing apparatuses (2a, 2b, 2c, 2d, 2n) in a descending order of the usage frequency starting from the highest usage frequency as the preset condition, and determines the delegation destination apparatus (2c) in an ascending order of the usage frequency starting from the lowest usage frequency.

5. The information synchronization system according to claim 4,
wherein the first processor (201) transmits the setting information to the one or more other second information processing apparatuses (2a, 2b, 2d, 2n) registered to the registration information in accordance with the descending order of the usage frequency starting from the highest usage frequency,
wherein the second processor (201) acquires the priority level determined for the one or more other second information processing apparatuses (2a, 2b, 2d, 2n) from the first information processing apparatus (2P), and transmits the setting information received from the first information processing apparatus (2P) to the one or more other second information processing apparatuses (2a, 2b, 2d, 2n) registered to the registration information in accordance with the descending order of the usage frequency.

6. The information synchronization system according to claim 4 or claim 5,
wherein when the second processor (201) of the delegation destination apparatus (2c) receives a notice indicating that the setting information is already synchronized at the one or more other second information processing apparatuses (2a, 2b, 2d, 2n) from all of the one or more other second information processing apparatuses (2a, 2b, 2d, 2n), the second processor (201) of the delegation destination apparatus (2c) updates the setting information retained in the delegation destination apparatus (2c) using the setting information received from the first information processing apparatus (2P).

7. A method of synchronizing setting information in an information synchronization system including a first information processing apparatus (2P) that is to synchronize the setting information related to settings of the first information processing apparatus (2P), and a plurality of second information processing apparatuses (2a, 2b, 2c, 2d, 2n) that are to be synchronized with the setting information of the first information processing apparatus (2P), the plurality of second information processing apparatuses (2a, 2b, 2c, 2d, 2n) being registered to registration information, the method comprising:
determining a delegation destination apparatus (2c) from the plurality of second information processing apparatuses (2a, 2b, 2c, 2d, 2n) registered to the registration information based on a preset condition, the delegation destination apparatus (2c) is delegated from the first information processing apparatus (2P) authority to perform a synchronization of the setting information to one or more other second information processing apparatuses of the plurality of second information processing apparatuses (2a, 2b, 2d, 2n);
transmitting the setting information, the registration information, and a request for processing related to synchronization of the setting information to the determined delegation destination apparatus (2c) from the first information processing apparatus (2P);
transmitting, from the first information processing apparatus (2P), the setting information to the one or more other second information processing apparatuses (2a, 2b, 2d, 2n) registered to the registration information to synchronize the setting information with the one or more other second information processing apparatuses (2a, 2b, 2d, 2n);
receiving, in the delegation destination apparatus (2c), the setting information, the registration information, and the request for processing related to the synchronization of the setting information from the first information processing apparatus (2P);
in response to receiving the request for processing related to the synchronization of the setting information from the first information processing apparatus (2P), changing a first flag of the delegation destination apparatus (2c) indicating that the delegation destination apparatus (2c) does not perform the synchronization of the setting information to the one or more other second information processing apparatuses (2a, 2b, 2d, 2n) to a second flag of the delegation destination apparatus (2c) indicating that the delegation destination apparatus (2c) performs the synchronization of the setting information to the one or more other second information processing apparatuses (2a, 2b, 2d, 2n); and
transmitting, from the delegation destination apparatus (2c), the setting information received from the first information processing apparatus (2P) to the one or more other second information processing apparatuses (2a, 2b, 2d, 2n) registered to the registration information to synchronize the setting information with the one or more other second information processing apparatuses (2a, 2b, 2d, 2n).

8. An information processing apparatus (2P) to synchronize setting information related to settings of the information processing apparatus (2P) with a plurality of another information processing apparatuses (2a, 2b, 2c, 2d, 2n), the plurality of another information processing apparatuses (2a, 2b, 2c, 2d, 2n) being registered to registration information, the information processing apparatus (2P) including a processor (201) configured to
determine a delegation destination apparatus (2c) from the plurality of another information processing apparatuses (2a, 2b, 2c, 2d, 2n) registered to the registration information based on a preset condition, the delegation destination apparatus (2c) is delegated from the information processing apparatus (2P) authority to perform a synchronization of the setting information to one or more other another information processing apparatuses of the plurality of another information processing apparatuses (2a, 2b, 2d, 2n);
transmit the setting information to the one or more other another information processing apparatuses (2a, 2b, 2d, 2n) registered to the registration information to synchronize the setting information with the one or more other another information processing apparatuses (2a, 2b, 2d, 2n); and
transmit the setting information, the registration information, and a request for processing related to synchronization of the setting information to the determined delegation destination apparatus (2c),
wherein the request for processing related to the synchronization of the setting information transmitted to the delegation destination apparatus (2c) causes the delegation destination apparatus (2c) to change a first flag of the delegation destination apparatus (2c) indicating that the delegation destination apparatus (2c) does not perform the synchronization of the setting information to the one or more other another information processing apparatuses (2a, 2b, 2d, 2n) to a second flag of the delegation destination apparatus (2c) indicating that the delegation destination apparatus (2c) performs the synchronization of the setting information to the one or more other another information processing apparatuses (2a, 2b, 2d, 2n), and causes the delegation destination apparatus (2c) to transmit the setting information received from the information processing apparatus (2P) to the one or more other another information processing apparatuses (2a, 2b, 2d, 2n) registered to the registration information to synchronize the setting information with the one or more other another information processing apparatuses (2a, 2b, 2d, 2n).

9. The information processing apparatus (2P) according to claim 8, wherein the processor (201) of the information processing apparatus (2P) transmits the request for processing related to the synchronization of the setting information to a processor (201) included in the delegation destination apparatus (2c).
